# EUROPÄISCHE PATENTANMELDUNG

(11) **EP 2 541 099 A1**
(43) Veröffentlichungstag der Anmeldung: **02.01.2013**
(21) Anmeldenummer: 12170156.9
(22) Anmeldetag: 31.05.2012
(51) Int. Cl.: F16H 25/24, F16H 25/22

(54) **Planetengewindetrieb mit Enddichtung mit einzelner Dichtkante**

(30) Priorität: 30.06.2011 DE 102011106079
(71) Anmelder: ROBERT BOSCH GMBH, 70442 Stuttgart (DE)
(72) Erfinder: Reinhart, Martin, 97499 Donnersdorf (DE); Groganz, Thomas, 97469 Gochsheim (DE)
(74) Vertreter: Maiß, Harald

(57) **Zusammenfassung**

Die Erfindung betrifft einen Planetengewindetrieb (10) mit einer Spindel (20), mit einem Außengewinde (21) und einer die Spindel (20) umgebende Mutter (30) mit einer Innenprofilierung (31), wobei zwischen der Mutter (30) und der Spindel (20) mehrere Planeten (40) mit einer Außenprofilierung (41), die sowohl in das Außengewinde (21) der Spindel (20) als auch in die Innenprofilierung (31) der Mutter (30) eingreifen, angeordnet sind, wobei zwei Enddichtungen (50) vorgesehen sind, die mit den gegenüberliegenden Enden der Mutter (20) fest verbunden sind, wobei sie in Dichteingriff mit dem Außengewinde (21) der Spindel (20) stehen, so dass der Innenraum der Mutter (20) dicht verschlossen ist, wobei der Innenraum der Mutter (20) mit Schmierfett gefüllt ist.

Erfindungsgemäß sind die beiden Enddichtungen (50) jeweils mit einer endlos umlaufenden, nach radial innen weisenden Dichtkante (51) versehen sind, wobei die Dichtkante (51) dem Außengewinde (21) der Spindel (20) in einer Ebene folgt, die senkrecht zur Mittelachse (11) des Außengewindes (21) der Spindel (20) verläuft, wobei das Volumen des Schmierfettes in der Mutter (30) kleiner ist als das Volumen des Freiraums im Innenraum der Mutter (20) abzüglich des Volumens, welches von den Planeten (40) überwälzt wird.

## Beschreibung

Die Erfindung betrifft einen Planetengewindetrieb gemäß dem Oberbegriff von Anspruch 1.

Aus der DE 196 37 526 A1 ist ein Planetengewindetrieb bekannt. Gemäß der Fig. 1 der DE 196 37 526 A1 umfasst der Planetengewindetrieb eine Spindel 1, die mit einem Außengewinde 2 versehen ist. Die Spindel umgibt eine Mutter 9, die mit einer Innenprofilierung 10, nämlich einem Innengewinde, versehen ist. Zwischen der Mutter und der Spindel sind mehrere Planeten 3 angeordnet, die mit einer Außenprofilierung 4, nämlich einem Außengewinde, versehen sind.

Derartige Planetengewindetriebe werden meist mit einer Enddichtung ausgestattet. Die Enddichtung wird üblicherweise aus einem im Wesentlichen nicht elastischen Kunststoff wie Polyoxymethylen (POM) gefertigt, wobei sie mit den gegenüberliegenden Enden der Mutter fest verbunden ist. Im Bereich des Dichteingriffs mit der Spindel ist die Enddichtung mit einem Innengewinde versehen, welches an das Außengewinde der Spindel angepasst ist. Das genannte Innengewinde erstreckt sich in Erstreckungsrichtung der Spindel beispielsweise über eine Länge von 10 mm. Mit einer derartigen Spaltdichtung kann der Austritt von Schmierfett aus dem Innenraum der Mutter wirksam verhindert werden.

Die Mutter eines Planetengewindetriebs ist meist mit viel Schmierfett gefüllt, da der Schmierstoffverbrauch aufgrund der unvermeidlichen Gleitanteile im Wälzkontakt der Planeten sehr hoch ist. Dieses Schmierfett wird von den abwälzenden Planeten immer wieder verdrängt, wodurch ein Schmiermitteldruck auf die Enddichtungen aufgebaut wird. Bei der bekannten Dichtung reicht dieser Schmiermitteldruck aber nicht aus, damit Schmiermittel über den Dichteingriff zwischen Spindel und Enddichtung aus der Mutter entweichen kann.

Der Nachteil der bekannten Dichtung besteht in deren großer Baulänge in Erstreckungsrichtung der Spindel.

Aus der DE 29 28 717 A1 ist eine Enddichtung für einen Kugelgewindetrieb bekannt, welche eine deutlich geringe Baulänge aufweist. Deren Dichtfläche wird von einer radial inneren Kante einer Dichtlippe gebildet, die in einer im Wesentlichen rechtwinklig zur Spindelachse liegenden Ebene angeordnet ist, wobei die radial innere Kante der Dichtlippe dem Verlauf des Gewindeprofils der Gewindespindel in der Ebene der Dichtlippe im Wesentlichen folgt. Derartige Enddichtungen werden bei Kugelgewindetrieben häufig eingesetzt und besitzen dort eine sehr gute Abdichtwirkung.

Wenn man diese Enddichtung jedoch bei einem Planetengewindetrieb einsetzt ergibt sich das Problem, dass im Bereich des Dichteingriffs zwischen Spindel und Enddichtung Schmierfett in größeren Mengen aus der Mutter austritt.

Die Aufgabe der Erfindung besteht darin, einen Planetengewindetrieb bereitzustellen, dessen Enddichtung eine geringe Baulänge aufweist, wobei während dem Betrieb des Planetengewindetriebs im Wesentlichen kein Schmierfett aus der Mutter austritt.

Gemäß dem selbständigen Anspruch wird diese Aufgabe dadurch gelöst, dass die beiden Enddichtungen jeweils mit einer endlos umlaufenden, nach radial innen weisenden Dichtkante versehen sind, wobei die Dichtkante dem Außengewinde der Spindel in einer Ebene folgt, die senkrecht zur Mittelachse des Außengewindes der Spindel verläuft, wobei das Volumen des Schmierfettes in der Mutter kleiner ist als das Volumen des Freiraums im Innenraum der Mutter abzüglich des Volumens, welches von den Planeten überwälzt wird. Demnach wird die vom Kugelgewindetrieb bekannte Dichtung auf den Planetengewindetrieb übertragen. Das Problem des Fettaustritts wird dadurch behoben, dass nur eine vergleichsweise geringe Menge an Schmierfett in die Mutter eingefüllt wird. Entgegen dem bisherigen Vorurteil, dass Planetengewindetriebe einen hohen Schmierfettverbrauch aufweisen, haben die Versuche der Anmelderin gezeigt, dass ein erfindungsgemäßer Planetengewindetrieb ohne weiteres bis zum ermüdungsbedingten Ausfall betrieben werden kann, ohne dass die verschlissenen Teile Anzeichen von Mangelschmierung aufweisen. Die Anmelderin führt dies auf die deutlich bessere Dichtwirkung der erfindungsgemäßen Enddichtung gegenüber der bekannten Enddichtung zurück.

In den abhängigen Ansprüchen sind vorteilhafte Weiterbildungen und Verbesserungen der Erfindung angegeben.

Die Spindel kann mit einem Spitzgewinde versehen sein, wobei an den Gewindespitzen eine Abflachung vorgesehen ist, wobei zwischen den Gewindeflanken und der Abflachung ein Eckenradius vorgesehen ist. Das Außengewinde der Spindel ist üblicherweise mit einem Spitzgewinde ausgestattet. Die Tiefe und die Breite der Gewinderillen sind dabei aber deutlich kleiner als bei einem Kugelgewindetrieb. Dementsprechend ist es schwieriger, die Dichtkante der Enddichtung genau an die Spindel anzupassen. Darüber hinaus können scharfe Kanten des Spitzgewindes die Dichtkante beschädigen, so dass es zu Undichtigkeiten kommt. Eben dies wird durch die Abflachung und die Eckenradien verhindert.

Das Spitzgewinde der Spindel kann einen Fußradius aufweisen, der zwei benachbarte Gewindeflanken stetig miteinander verbindet. Die Breite der Enddichtung im Bereich der Dichtkante kann nicht beliebig klein ausgeführt werden. Die genannte Breite kann beispielsweise 0,2 mm betragen. Damit im Fußbereich dennoch eine gute Abdichtung erreicht wird, ist der Fußradius vorgesehen. Dieser Fußradius ist so groß ausgeführt, dass eine gute Dichtwirkung gegeben ist. Der genannte Fußradius ist vorzugsweise größer als die Breite der Enddichtung im Bereich der Dichtkante.

Die Gewindeflanken des Spitzgewindes der Spindel können konvex gekrümmt sein, wobei die Profilflanken der Planeten konvex gekrümmt sind, wobei die Krümmung der Profilflanken der Planeten größer als die Krümmung der Gewindeflanken der Spindel ist. Das erfindungsgemäß verrundete Außengewinde der Spindel wird vorzugsweise im Gewinderollverfahren hergestellt. Dieses Verfahren ist zwar sehr kostengünstig, die Profilgenauigkeit des Außengewindes ist jedoch geringer als beim üblicherweise angewendeten Gewindeschleifen. Um derartige Fertigungstoleranzen auszugleichen sind sowohl die Gewindeflanken der Spindel als auch der Planeten konvex gekrümmt ausgeführt. Damit ist auch bei toleranzbedingten Abweichungen vom Idealprofil ein reibungsarmer Lauf des Planetengewindetriebs gegeben. Es ist klar, dass hierdurch die Tragfähigkeit des Planetengewindetriebs sinkt, da die Kontaktspannungen steigen. Die Versuche der Anmelderin haben gezeigt, dass sich eine optimale Lebensdauer ergibt, wenn die Krümmung der Profilflanken der Planeten größer als die Krümmung der Gewindeflanken der Spindel ist. Die genannten Krümmungen werden dabei bestimmt, indem die Form der genannten Flanken durch einen Kreisbogen angenähert wird. Der Kehrwert des Radius des Kreisbogens ist ein Maß für die Krümmung der entsprechenden Flanke.

Die Profilflanken der Mutter können konvex gekrümmt sein, wobei die Krümmung der Profilflanken der Planeten größer als die Krümmung der Profilflanken der Mutter ist. Üblicherweise sind sowohl die Flanken der Spindel als auch die Mutter eben ausgeführt. In Verbindung mit den konvexen Gewindeflanken an der Spindel ist es jedoch bevorzugt, auch die Profilflanke der Mutter konvex gekrümmt auszuführen. Hierdurch sinkt die Tragfähigkeit des Planetengewindetriebs nicht weiter ab, solange die Krümmung an der Mutter die Krümmung an der Spindel nicht übersteigt. Gleichzeitig können die Anforderungen an die Fertigungsgenauigkeit der Mutter herabgesetzt werden, so dass deren Herstellkosten sinken.

Die Enddichtung kann als gesondertes, plattenartiges Bauteil ausgeführt sein, wobei der radial innere Bereich mit der Dichtkante eine geringere Dicke aufweist als der radial äußere Bereich, der an der Mutter befestigt ist. Der radial innere Bereich, der vorzugsweise aus einem Elastomer besteht, kann hierdurch mit einer Biegeelastizität ausgestattet werden, die es erlaubt, kleine axiale Lageabweichungen der Enddichtung von der Ideallage auszugleichen. Hierbei ist anzumerken, dass der Verlauf der Dichtkante der Enddichtung auf eine ganz bestimmte Lage in Bezug auf die Mutter hin optimiert ist. Bereits kleinste Lageabweichungen der Enddichtung von dieser Ideallage ergeben größere Änderungen hinsichtlich der Idealform der Dichtkante. Dies ist insbesondere auf die geringe Breite der Gewinderillen an der Spindel zurückzuführen.

Die Mutter kann mit einer umlaufenden, nach radial innen weisenden Haltenut versehen sein, wobei die Enddichtung in die Haltenut eingeschnappt ist, wobei die Breite der Haltenut im Wesentlichen gleich der Dicke des radial äußeren Bereichs der Enddichtung ist. Auf diese Weise kann die Enddichtung kostengünstig und im Wesentlichen spielfrei an der Mutter befestigt werden.

Die Enddichtung kann im Bereich der Dichtkante mit einer Abschrägung versehen sein, wobei sich die Neigung der Abschrägung derart von der Neigung des Spitzgewindes der Spindel unterscheidet, dass die Enddichtung das Spitzgewinde nur an der Dichtkante berührt. Hierdurch wird sichergestellt, dass sich die Spindel und die Enddichtung ausschließlich an der Enddichtung berühren. Eine weitere Berührstelle könnte dazu führen, dass der Dichteingriff an der Dichtkante aufgehoben wird, so dass Fett aus der Mutter austreten kann.

Das Außengewinde der Spindel kann mehrgängig ausgeführt sein, wobei die Innenprofilierung der Mutter als Innengewinde mit der gleichen Gangzahl und der gleichen Steigung wie die Spindel ausgeführt ist, wobei die Planeten ein eingängiges Außengewinde mit einer angepassten Steigung aufweisen. Hierdurch wird erreicht, dass das Schattenbild des Außengewindes der drehenden Spindel an der stillstehenden Mutter während der Drehung immer gleich bleibt. Wäre diese Bedingung nicht erfüllt, so wäre die Dichtkante einer ständigen Ausgleichsbewegung unterworfen, um dem relativ zur Mutter wandernden Außengewinde zu folgen. Hierdurch würde die Dichtkante nach kurzer Zeit zerstört werden.

Die Erfindung wird im Folgenden anhand der beigefügten Zeichnungen näher erläutert. Es stellt dar:
- Fig. 1: einen Längsschnitt eines erfindungsgemäßen Planetengewindetriebs;
- Fig. 2: einen vergrößerten Ausschnitt von Fig. 1 im Bereich des Dichteingriffs der Enddichtung;
- Fig. 3: einen Querschnitt der Spindel mit der Enddichtung, wobei die Schnittebene in der Ebene der Dichtkante verläuft;
- Fig. 4: einen Längsschnitt des Gewindeprofils der Spindel; und
- Fig. 5: eine perspektivische Ansicht des Volumens des Freiraums im Innenraum der Mutter abzüglich des Volumens, welches von den Planeten überwälzt wird.

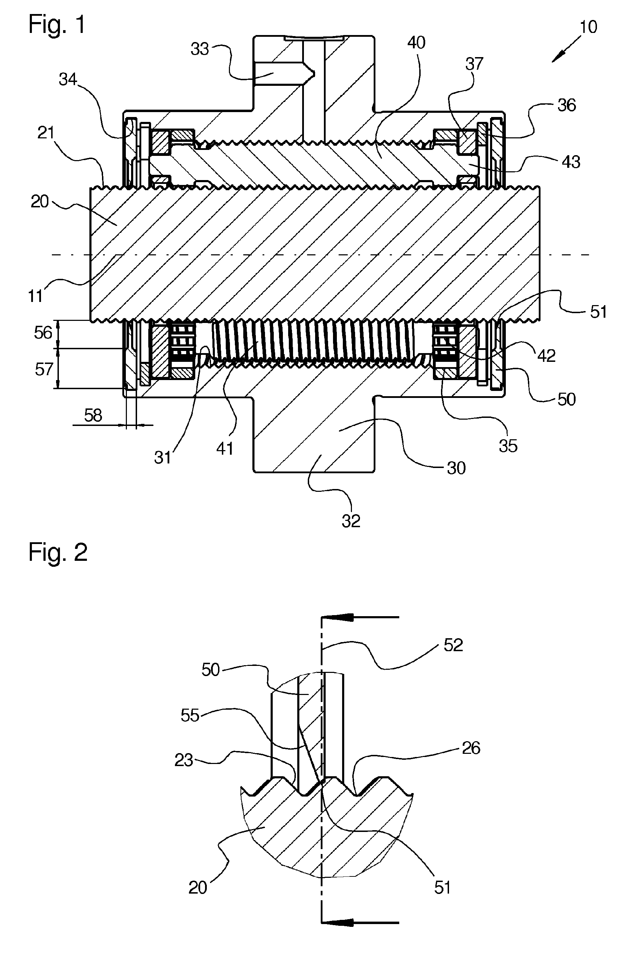

Fig. 1 zeigt einen Längsschnitt eines erfindungsgemäßen Planetengewindetriebs 10. Der Planetengewindetrieb 10 umfasst eine langgestreckte Spindel 20, die mit einem fünfgängigen Außengewinde 21 versehen ist, wobei die Gewindegänge schraubenförmig bezüglich der Mittelachse 11 der Spindel 20 verlaufen. Weiter ist eine Mutter 30 vorgesehen, welche die Spindel 20 hülsenartig umgibt. An ihrer Innenumfangsfläche ist die Mutter 30 mit einer Innenprofilierung 31, nämlich mit einem fünfgängigen Innengewinde, versehen, welches die gleiche Steigung aufweist, wie das Außengewinde 21 der Spindel 20. Zwischen der Mutter 30 und der Spindel 20 sind insgesamt neun identische Planeten 40 angeordnet, die mit einer Außenprofilierung 41, nämlich einem Außengewinde, versehen sind. Das Außengewinde 41 der Planeten 40 ist eingängig ausgeführt, wobei es im Übrigen an die Spindel 20 und die Mutter 30 angepasst ist, so dass es in die dortigen Gewinde 21; 31 eingreifen kann. Insbesondere beträgt die Steigung der Planeten 1/5tel der Steigung der Spindel 20 bzw. der Mutter 30.

An ihren beiden Enden sind die Planeten 40 mit einem Zapfen 43 versehen, der in eine zugeordnete Führungsscheibe 37 drehbeweglich eingreift, so dass die Planeten 40 auf Abstand gehalten werden. Die axiale Lage der Führungsscheibe 37 wird durch einen zugeordneten Sicherungsring 36 festgelegt, der in eine umlaufende Nut der Mutter 30 eingreift. Weiter sind die Planeten 40 an ihren beiden Enden mit einer geraden Außenverzahnung 42, die in eine angepasste Innenverzahnung 35 an der Mutter 30 eingreift. Hierdurch wird unerwünschter Schlupf zwischen den Planeten 40 und der Mutter 30 bzw. der Spindel 20 vermieden. Die Innenverzahnung 35 ist an einem gesonderten Bauteil ausgeführt, welches spielfrei in die Mutter 30 eingebaut ist, wobei dessen Drehlage mittels (nicht dargestellter) Gewindestifte fixiert ist.

Die Mutter 30 ist weiterhin mit einem einstückigen Flansch 32 versehen, über den sie an einer (nicht dargestellten) übergeordneten Baugruppe befestigt werden kann. In dem Flansch 32 ist ein Schmierkanal 33 vorgesehen, der zum Ort des Wälzeingriffs zwischen den Planeten 40 mit der Mutter 30 führt. Über den Schmierkanal 33 kann dem Planetengewindetrieb 10 während des Betriebs Schmiermittel, insbesondere Schmierfett oder Schmieröl, zugeführt werden.

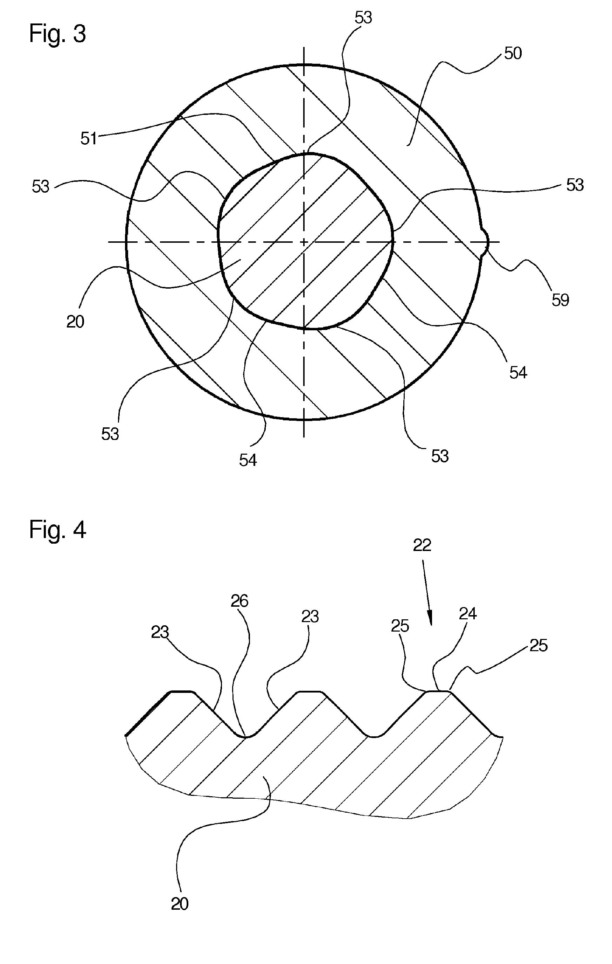

An den gegenüberliegenden Enden der Mutter 30 ist je eine Enddichtung 50 befestigt. Die beiden Enddichtungen 50 sind identisch ausgeführt und bestehen vorzugsweise vollständig aus einem Elastomer, insbesondere TEEE (Thermoplastisches Ether Ester Elastomer; Handelsname "Hytrel"). Die Enddichtung 50 ist in einer umlaufenden, nach radial innen weisenden Haltenut 34 in der Mutter formschlüssig aufgenommen. Die Breite der Haltenut ist im Wesentlichen gleich der Dicke 58 der Enddichtung 50 im radial äußeren Bereich 57 ausgeführt, wobei die Maßtoleranzen so gewählt sind, dass nie ein Presssitz auftritt. Die Enddichtung 50 ist in eine Haltenut 34 eingeschnappt, d. h. die Enddichtung 50 wird bei der Montage elastisch verformt. Die Drehlage der Enddichtung 50 wird durch den Ausrichtfortsatz (Nr. 59; Fig. 3), der in eine (nicht dargestellte) angepasste Ausnehmung der Mutter 30 eingreift, festgelegt.

Der radial innere Bereich 56 der insgesamt plattenartigen Enddichtung weist eine geringere Dicke auf als der radial äußere Bereich 57. Hierdurch kann die Dichtkante 51 am radial inneren Bereich 56 der Enddichtung 50 etwas in Richtung der Mittelachse 11 verlagert werden, um Montagetoleranzen auszugleichen. Der radial innere Bereich 56 der Enddichtung 50 wird hierbei minimal biegeverformt.

Fig. 2 zeigt einen vergrößerten Ausschnitt von Fig. 1 im Bereich des Dichteingriffs der Enddichtung 50. Zu erkennen ist die Abschrägung 55 im Bereich der Dichtkante 51 der Enddichtung 50. Die Neigung der Abschrägung 55 unterscheidet sich dabei so von der Neigung der benachbarten Gewindeflanke 23 des Spitzgewindes an der Spindel 20, dass die Enddichtung 50 die Spindel 20 nur an der Dichtkante 51 berührt.

Weiter ist zu erkennen, dass die Dichtkante 51 mit einer endlichen Breite von beispielsweise 0,2 mm ausgeführt ist. Der Fußradius 26 des Spitzgewindes ist dabei so groß ausgeführt, dass die Dichtkante 51 auch im Fußradius 26 vollständig dicht an der Spindel 20 anliegt.

Fig. 3 zeigt einen Querschnitt der Spindel 20 mit der Enddichtung 50, wobei die Schnittebene in der Ebene (Nr. 52; Fig. 2) der Dichtkante 51 verläuft, welche senkrecht zur Mittelachse (Nr. 11; Fig. 1) der Spindel 20 ausgerichtet ist. Die Form der Dichtkante 51 in der Schnittebene lässt sich insgesamt als Fünfeck charakterisieren, dessen Ecken verrundet sind. Die Anzahl der verrundeten Ecken 53 ergibt sich aus der Anzahl der Gänge des Außengewindes der Spindel 20, im vorliegenden Fall fünf. An jeder abgerundeten Ecke 53 überquert die Dichtkante 51 die abgeflachte Spitze (Nr. 22; Fig. 4) eines Gewindegangs. Mit den leicht gekrümmten Abschnitten 54 zwischen den abgerundeten Ecken 53 durchquert die Dichtkante 51 den Fußradius (Nr. 26; Fig. 4) zwischen zwei benachbarten Gewindegängen.

Der theoretische Verlauf der Dichtkante 51 wird durch die Schnittkante zwischen einer Schnittebene (Nr. 52; Fig. 2) senkrecht zur Mittelachse der Spindel 20 und der Spindel 20 selbst definiert. Dieser Verlauf wird der elastischen Dichtkante 51 durch die Spindel 20 aufgezwungen. Im unverformten Zustand weicht die Dichtkante 51 von diesem theoretischen Verlauf etwas nach radial innen ab, damit die Dichtkante 51 mit Vorspannung an der Spindel 20 anliegt. Das Ausmaß der Abweichung ist nicht an allen Stellen gleich groß. Es muss vielmehr durch Versuch so optimiert werden, dass sich eine optimale Dichtwirkung ergibt, wobei insbesondere ein vollständiges Abheben der Dichtkante 51 von der Spindel 20 vermieden wird.

Fig. 4 zeigt einen Längsschnitt des Gewindeprofils der Spindel 20. Die Spindel 20 weist ein fünfgängiges Spitzgewinde auf. Die Gewindespitzen 22 sind mit einer Abflachung 24 versehen, damit die Dichtkante der Enddichtung bei ihrer Bewegung über die Gewindespitzen 22 nicht beschädigt, insbesondere nicht abgeschabt, wird. Zwischen den tragenden Gewindeflanken 23 und der Abflachung 24 ist ein Eckenradius 25 vorgesehen, um den genannten Effekt weiter zu verbessern.

Zwei unmittelbar benachbarte Gewindeflanken 23 sind über einen Fußradius 26 miteinander verbunden, damit die Dichtkante der Enddichtung, die eine endliche Breite aufweist, auch in diesem Bereich spaltfrei an der Spindel 20 anliegt. Darüber hinaus vereinfacht der Fußradius 26 die Herstellung des Außengewindes an der Spindel 20. Weiter wird durch den Fußradius 26 die Tragfähigkeit der Spindel 20 erhöht.

Die Gewindeflanken 23 der Spindel 20 sind konvex gewölbt. Der entsprechende Krümmungsradius ist jedoch so groß, dass er in der Darstellung nach Fig. 4 nur schwer zu erkennen ist. Dennoch bewirkt diese Krümmung, dass die Gewindeflanken der Planenten an einer definierten Stelle in der Mitte der Gewindeflanken 23 an der Spindel 20 anliegen. Die Profilflanken der Planeten sind ebenfalls leicht konvex gekrümmt ausgeführt, wobei deren Krümmung etwa doppelt so groß ausgeführt ist wie die der Spindel.

Als Maß für die Krümmung wird dabei der Kehrwert des Krümmungsradius der entsprechenden Gewinde- bzw. Profilflanke betrachtet. Da die Gewinde- bzw. Profilflanke nicht ideal kreisförmig gekrümmt ist, wird ein angenäherter Kreisbogen zur Bestimmung der Krümmung verwendet, der vorzugsweise mit der Methode der kleinsten Quadrate ermittelt wird.

Die Profilflanken der Mutter sind ebenfalls konvex gekrümmt, wobei deren Krümmung in etwa genau so groß ist wie die Krümmung der Profilflanken der Spindel.

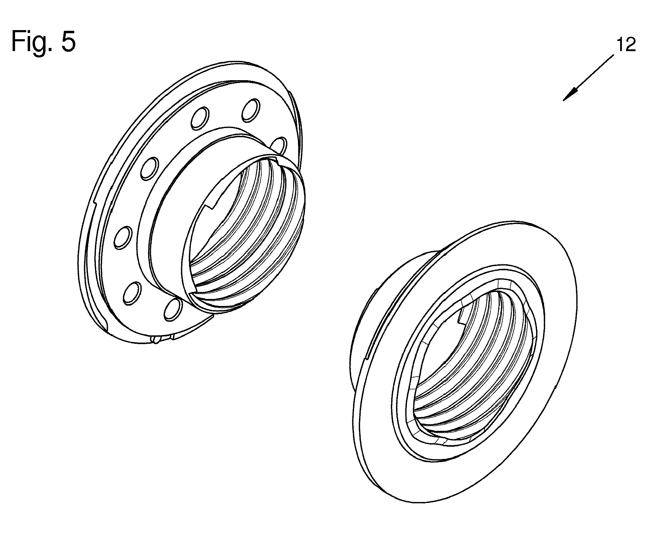

Fig. 5 zeigt eine perspektivische Ansicht des Volumens des Freiraums im Innenraum der Mutter abzüglich des Volumens, welches von den Planeten überwälzt wird. Das genannte Volumen 12 ist dabei entgegen den tatsächlichen Verhältnissen als Vollkörper dargestellt.

Hierbei ist zu erkennen, dass sich zwei vollständig voneinander getrennte Volumina ergeben, die im Wesentlichen spiegelsymmetrisch zueinander ausgebildet sind. Dies liegt darin begründet, dass die Planeten den Freiraum zwischen den Enden der Mutter vollständig überwälzen. Insbesondere wird nahezu die gesamte Schmierfettmenge, die sich in diesem Raumbereich befindet, von den abwälzenden Planeten zur Seite verdrängt. Einzig die Fettmenge, die als Schmierfilm auf der Spindel, den Planeten und der Mutter haften bleibt, ist von diesem Effekt ausgenommen.

Durch die Relativbewegung zwischen Spindel und Mutter wird jedoch auch Fett aus dem dargestellten Freiraum wieder zurück zwischen die Planeten gefördert, so dass es im Wälzkontakt wieder seine Schmierfunktion erfüllen kann. Die Schmierfettmenge, die an der Spindel haftet, geht zu einem gewissen Anteil verloren, wenn sich die Dichtkante der Enddichtung über den genannten Schmierfilm hinweg bewegt. Dabei wird der genannte Schmierfilm nicht vollständig von der Dichtkante abgestreift, so dass ein Teil des Schmierfetts den Innenraum der Mutter verlässt. Schmierfett, das einmal die Mutter verlassen hat, sammelt sich meist an den Enden der Spindel an und gelangt nicht wieder zurück in die Mutter.

Sobald die Erstbefüllung des Planetengewindetriebs mit Schmierfett durch die vorstehend beschriebenen Effekte verbraucht ist, kann neues Schmierfett durch den Schmierkanal (Nr. 33; Fig. 1) nachgefüllt werden. Dabei ist die Schmierfettmenge so gering zu dosieren, dass das Volumen des Schmierfettes in der Mutter immer kleiner ist als das Volumen des Freiraums im Innenraum der Mutter abzüglich des Volumens, welches von den Planeten überwälzt wird. Andernfalls würde überschüssiges Schmierfett im Bereich des Dichteingriffs zwischen Enddichtung und Spindel aus der Mutter heraustreten.

### Bezugszeichenliste

- 10: Planetengewindetrieb
- 11: Mittelachse
- 12: Volumen des Freiraums im Innenraum der Mutter abzüglich des Volumens, welches von den Planeten überwälzt wird

- 20: Spindel
- 21: Außengewinde
- 22: Gewindespitze
- 23: Gewindeflanke der Spindel
- 24: Abflachung
- 25: Eckenradius
- 26: Fußradius

- 30: Mutter
- 31: Innenprofilierung
- 32: Flansch
- 33: Schmierkanal
- 34: Haltenut
- 35: Innenverzahnung
- 36: Sicherungsring
- 37: Führungsscheibe

- 40: Planet
- 41: Außenprofilierung
- 42: Außenverzahnung
- 43: Zapfen

- 50: Enddichtung
- 51: Dichtkante
- 52: Ebene, in der die Dichtkante verläuft
- 53: verrundete Ecke
- 54: leicht gekrümmter Abschnitt
- 55: Abschrägung
- 56: radial innerer Bereich der Enddichtung
- 57: radial äußerer Bereich der Enddichtung
- 58: Dicke des radial äußeren Bereichs
- 59: Ausrichtfortsatz

## Patentansprüche

1. Planetengewindetrieb (10) mit einer Spindel (20), mit einem Außengewinde (21) und einer die Spindel (20) umgebende Mutter (30) mit einer Innenprofilierung (31), wobei zwischen der Mutter (30) und der Spindel (20) mehrere Planeten (40) mit einer Außenprofilierung (41), die sowohl in das Außengewinde (21) der Spindel (20) als auch in die Innenprofilierung (31) der Mutter (30) eingreifen, angeordnet sind, wobei zwei Enddichtungen (50) vorgesehen sind, die mit den gegenüberliegenden Enden der Mutter (20) fest verbunden sind, wobei sie in Dichteingriff mit dem Außengewinde (21) der Spindel (20) stehen, so dass der Innenraum der Mutter (20) dicht verschlossen ist, wobei der Innenraum der Mutter (20) mit Schmierfett gefüllt ist,
**dadurch gekennzeichnet, dass** die beiden Enddichtungen (50) jeweils mit einer endlos umlaufenden, nach radial innen weisenden Dichtkante (51) versehen sind, wobei die Dichtkante (51) dem Außengewinde (21) der Spindel (20) in einer Ebene (52) folgt, die senkrecht zur Mittelachse (11) des Außengewindes (21) der Spindel (20) verläuft, wobei das Volumen des Schmierfettes in der Mutter (30) kleiner ist als das Volumen (12) des Freiraums im Innenraum der Mutter (20) abzüglich des Volumens, welches von den Planeten (40) überwälzt wird.

2. Planetengewindetrieb nach Anspruch 1,
**dadurch gekennzeichnet, dass** die Spindel (20) mit einem Spitzgewinde versehen ist, wobei an den Gewindespitzen (22) eine Abflachung (24) vorgesehen ist, wobei zwischen den Gewindeflanken (23) und der Abflachung (24) ein Eckenradius (25) vorgesehen ist.

3. Planetengewindetrieb nach Anspruch 2,
**dadurch gekennzeichnet, dass** das Spitzgewinde der Spindel (20) einen Fußradius (26) aufweist, der zwei benachbarte Gewindeflanken (23) stetig miteinander verbindet.

4. Planetengewindetrieb nach Anspruch 2 oder 3,
**dadurch gekennzeichnet, dass** die Gewindeflanken (23) des Spitzgewindes der Spindel (20) konvex gekrümmt sind, wobei die Profilflanken der Planeten (40) konvex gekrümmt sind, wobei die Krümmung der Profilflanken der Planeten (40) größer als die Krümmung der Gewindeflanken (23) der Spindel (20) ist.

5. Planetengewindetrieb nach Anspruch 4,
**dadurch gekennzeichnet, dass** die Profilflanken der Mutter (30) konvex gekrümmt sind, wobei die Krümmung der Profilflanken der Planeten (40) größer als die Krümmung der Profilflanken der Mutter (30) ist.

6. Planentengewindetrieb nach einem der vorstehenden Ansprüche,
**dadurch gekennzeichnet, dass** die Enddichtung (50) als gesondertes, plattenartiges Bauteil ausgeführt ist, wobei der radial innere Bereich (56) mit der Dichtkante (51) eine geringere Dicke aufweist als der radial äußere Bereich (57), der an der Mutter (20) befestigt ist.

7. Planentengewindetrieb nach Anspruch 6,
**dadurch gekennzeichnet, dass** die Mutter (30) mit einer umlaufenden, nach radial innen weisenden Haltenut (34) versehen ist, wobei die Enddichtung (50) in die Haltenut (34) eingeschnappt ist, wobei die Breite der Haltenut (34) im Wesentlichen gleich der Dicke (58) des radial äußeren Bereichs (57) der Enddichtung (50) ist.

8. Planentengewindetrieb nach einem der Ansprüche 2 bis 7,
**dadurch gekennzeichnet, dass** die Enddichtung (50) im Bereich der Dichtkante (51) mit einer Abschrägung (55) versehen ist, wobei sich die Neigung der Abschrägung (55) derart von der Neigung des Spitzgewindes der Spindel (20) unterscheidet, dass die Enddichtung (50) das Spitzgewinde nur an der Dichtkante (51) berührt.

9. Planentengewindetrieb nach einem der vorstehenden Ansprüche,
**dadurch gekennzeichnet, dass** das Außengewinde (21) der Spindel (20) mehrgängig ausgeführt ist, wobei die Innenprofilierung (31) der Mutter (30) als Innengewinde mit der gleichen Gangzahl und der gleichen Steigung wie die Spindel (20) ausgeführt ist, wobei die Planeten (40) ein eingängiges Außengewinde mit einer angepassten Steigung aufweisen.
